# EUROPEAN PATENT SPECIFICATION

(11) **EP 0 865 036 B1**
(45) Date of publication and mention of the grant of the patent: **27.08.2003**
(21) Application number: 98301576.9
(22) Date of filing: 03.03.1998
(51) Int. Cl.: G11B 7/09

(54) **Optical pick-up apparatus**
Optisches Abtastgerät
Dispositif de lecture optique

(30) Priority: 12.03.1997 JP 5731297
(43) Date of publication of application: 16.09.1998
(73) Proprietor: Ricoh Company, Ltd, Ohta-ku Tokyo 143 (JP)
(72) Inventor: Sofue, Masaaki c/o Ricoh Company, Ltd., Ota-Ku Tokyo 143 (JP); Sakurai, Tatsuaki c/o Ricoh Company, Ltd., Ota-Ku Tokyo 143 (JP); Kudou, Ryuuji, yokohama-shi 240-0052 (JP)
(74) Representative: Senior, Alan Murray

(56) References cited:
- EP-A- 0 323 320
- EP-A- 0 426 053
- EP-A- 0 452 028
- US-A- 4 498 159
- US-A- 4 532 522
- US-A- 5 033 040

## Description

The present invention relates to a method for an optical pick-up apparatus which detects a focusing error signal using the knife edge method.

In general, an optical pick-up apparatus needs tracking servo control and focusing servo control in order to focus a beam on an optical recording media and to follow a beam on the track when recording, reproducing or erasing. Such apparatus use a focusing error signal to control the focus server to correct the focusing error. The focusing error signal may be detected by the asymmetry aberration method or the knife edge method.

A pick-up apparatus also detects a tracking error signal to control the tracking servo to correct tracking errors. There are several methods of detecting the tracking error signal. One of the methods is the three-beam method which uses a main beam and two sub-beams which form spots in front of and behind the main beam in the track direction. This method is disclosed in detail in "optical pick-up system point of development" published by Japan Industrial Technique Center. In the three-beam method, the tracking beam method is detected as the difference between the amount of light reflected from the two beams. Therefore it is usual to shift the sub-beams by one quarter of a track pitch position radially from the track centre to obtain the highest detection sensitivity.

Another method for detecting the tracking error signal is the differential push-pull method. In this method a main beam and two sub-beams are used. The position of the sub-beams spots are shifted by half a track pitch radially. In this method the tracking error signal is detected by detecting push-pull signals of the reflection from the main beam and sub-beams respectively and taking their differences.

However, when the three-beam method or the differential push-pull method is used to detect the tracking error signal and the knife edge method used to detect the focusing signal, the knife edge interrupts each reflected beam from the two sub-beams by different amounts. One beam is largely intercepted and reflected by the knife edge whilst the other is mostly not intercepted by the knife edge and not reflected. Therefore, even if there is no tracking error, the amount of light received by two photodetectors used for the tracking error is different. This is treated as a tracking error unless manually corrected.

It is therefore an aim of the present invention to provide a method for an optical pick-up apparatus using the knife edge method to detect the focusing error signal and which can correct an imbalance in an amount of reflected light from the two sub-beams detected by the photodetectors.

According to a first aspect of the invention there is provided a method for an optical pick-up apparatus for projecting on to an optical disc a main light spot for recording, reproducing and erasing information and two light sub-spots for detecting a tracking error signal, a first one of the two sub-spots being projected on to the optical disc ahead of the main spot relative to the recording direction and a second one of the two sub-spots being projected on to the disc behind the main spot relative to the recording direction, the optical pick-up apparatus detecting a focusing error signal in one photodetector by the knife edge method, the knife edge reflecting a part of the detection beams to another photodetector for detecting tracking error signals; characterised in that:
the sub-spot which gives rise to the detection sub-beam which is intercepted by the knife edge to a lesser extent is projected onto the optical disc in a position which is located between a track on which the main spot is radiated and a non-record track ahead of the main spot relative to the recording direction, and the sub-spot which gives rise to the detection sub-beam which is intercepted by the knife edge to a greater extent is projected onto the optical disc in a position which is located between a track on which the main spot is radiated and the recorded track behind the main beam relative to the recording direction.

In the method of the present invention the tracking error signal may be detected by the three-beam method or by the differential push-pull method.

In the present invention relatively little of the sub-beam which is intercepted least by the knife edge is reflected by it to the photodetector. Therefore the amount of light reaching the photodetector for detecting the tracking error signal is reduced. However, when recording on the recording media, the non-recorded portion which is ahead of the main beam has a high reflectivity so that the sub-beam incident on it is reflected strongly. At the same time, a relatively high proportion of the sub-beam which is most intercepted by the knife edge is reflected by it to the photodetector. Thus the amount of light reaching the photodetector for detecting the tracking error signal is great. Also, the recorded portion which is behind the main beam has a low reflectivity so that the sub-beam incident on it is reflected weakly. In view of this, the present invention provides that the imbalance in the proportion of the light in the two sub-beams reflected by the knife edge and the imbalance in the two reflectivities of the recorded and non-recorded portions of the recording media are arranged to compensate. Therefore the amount of light from the two sub-beams received by the respective photodetectors is equal.

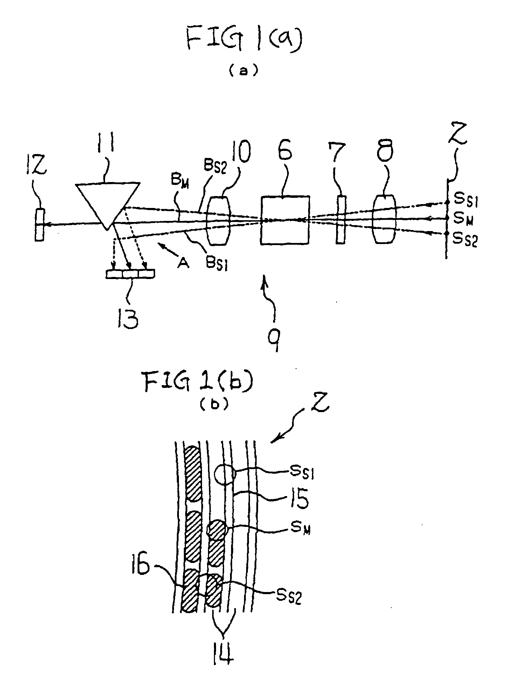

The present invention will be further described below with reference to exemplary embodiments and the accompanying drawings, in which:
Figure la is a side schematic view of an optical detector arrangement in an apparatus according to the invention and Fig. 1b is a plan view showing the positions of spots on an optical disc;
Figure 2 is a perspective schematic view of an optical pick-up apparatus;
Figure 3 is a schematic elevation showing the position of the beams in an optical pick-up apparatus;
Figure 4 is a view taken in a direction of arrow A of Figure 1 showing the reflection of the beams by the knife edge.

The optical pick-up apparatus in accordance with the present invention detects the focusing error signal using the knife edge method and the tracking signal using the three beam method.

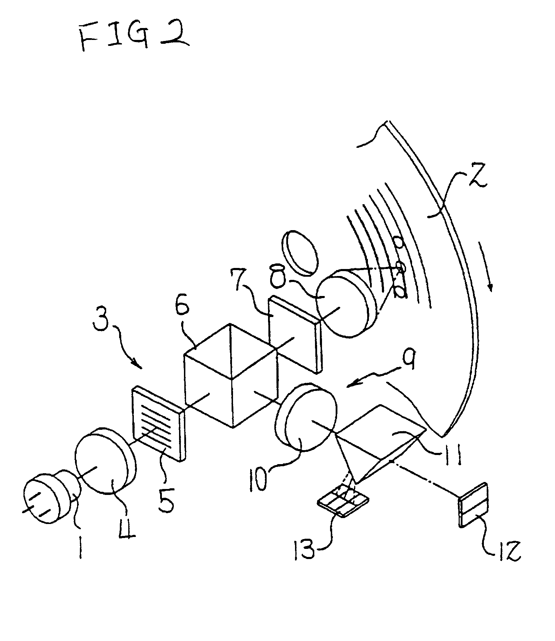

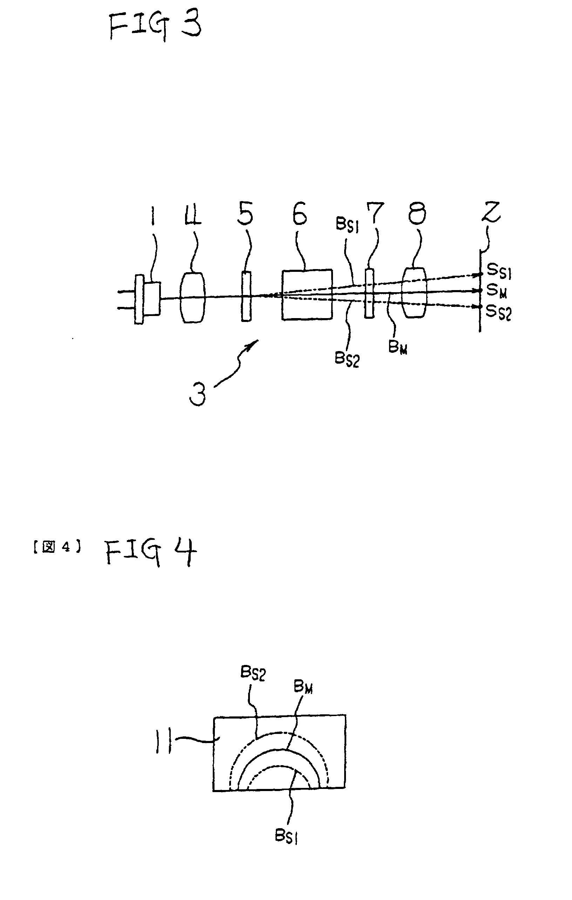

The optical pick-up apparatus comprises a radiating optical system 3 showing in Figure 3 a detecting optical system 9 shown in Figure la. The radiating optical system 3 directs and focuses the beam emitted by the later diode. 1 on to the optical disc 2 which rotates in the direction shown by the arrow in Figure 2. The radiating optical system 3 comprises collimating lens 4, diffracting grating 5, polarising beam splitter 6, quarter wave plate 7 and objective lens 8 which are arranged along the optical path. The detecting optical system also comprises the objective lens 8 the quarter wave plate 7 and the polarising beam splitter 6. The detecting optical system further comprises detecting lens 10 located on the path of light reflected by the polarising beam splitter 6, a knife edge 11 located around the centre of that optical path, photodetector 12 for detecting the focusing error signal and located on the optical path behind the knife edge, and photodetector 13 for detecting the tracking error signal and located on the optical path of light reflected by the knife edge 11.

Light emitted by the laser diode. 1 is collimated by the collimator lens 4 and divided into plural beams Bₘ Bₛ₁ and Bₛ₂ by the diffraction grating 5 which has a sinusoidal transmission function. The divided beams then pass through the polarizing beam splitter 6 and quarter wave plate 7 and are focused on to the optical disc 2 as minute spots Sₘ, Sₛ₁ and Sₛ₂ by the objective lens 8. The reflected beams from the spots Sₘ, Sₛ₁ and Sₛ₂ are collimated as they pass again through the objective lens 8. Their polarization direction is rotated by 90° by the quarter wave plate and they are reflected by the polarizing beam splitter 6 and directed to the detection lens 10. The detection lens 10 directs the beams to the knife edge 11.

The beam Bₘ is the main beam used for recording, reproducing, erasing and detecting the focusing error signal. It is, for example, formed by the zero^{th} order diffraction beam from the diffraction grating 5 and is focused on to the track 14 of the optical disc 2 as the main spot Sₘ. The beams Bₛ₁ and Bₛ₂ are sub-beams used for detecting the tracking error signal. For example, the sub-beams are formed by the ± 1 order diffraction beams of the diffraction grating 5. They are focused on positions shifted by a quarter of the track pitch radially from track 14 in opposite directions as sub-spots Sₛ₁ and Sₛ₂ located ahead of and behind the main spot Sₘ. When the sub-beam Bₛ₁ is intercepted by the knife edge to a lesser extent than the sub-beam Bₛ₂ the sub-spot Sₛ₁ is located ahead of the main spot Sₘ in the recording direction. Correspondingly, the sub-spot Sₛ₂ formed by the sub-beam Bₛ₂ which is intercepted more by the knife edge 11 is located behind the main spot relative to the recording direction.

In the apparatus, the beams reflected from the spots Sₘ, Sₛ₁ and Sₛ₂ on the optical disc are directed to the photodetectors 12 and 13 via the knife edge in the detecting optical system 9. The sub-beam Bₛ₁ corresponding to the sub-spot Sₛ₁ is located so as to be incident on the lower part of the knife edge 11 as shown in Figure 4. As can be seen, a lower proportion of the beam Bₛ₁ is intercepted by the knife edge 11 so that a lesser amount of light is reflected to the photodetector 13. On the other hand, the sub-beam Bₛ₂ corresponding to the sub-spot Sₛ₂ is directed to the higher part of the knife edge 11, as again shown in Figure 4. A greater proportion of the beam Bₛ₂ is therefore intercepted by the knife edge 11 and the amount of light reflected to the photodetector 13 is therefore greater. Accordingly the proportion of the sub-beams Bₛ₁ and Bₛ₂ received by the photodetector 13 are imbalanced. Therefore there would appear to be a tracking error even if there is not one.

However, in the embodiment of the present invention, the sub-spot Sₛ₁ is arranged to be radiated on a position ahead of the main spot Sₘ in the recording direction. As shown in Figure 1b this portion, 15, has not been recorded on and has a high reflectance. Therefore the amount of light reflected in to the sub-beam Bₛ₁ is high. On the other hand, the sub-spot Sₛ₂ corresponding to the sub-beam Bₛ₂ is located on the disc in a position behind the main spot Sₘ relative to the recording direction. This portion 16 has been recorded on and has a relatively low reflectance. Therefore the amount of light reflected into the sub-beam Bₛ₂ is reduced.

Accordingly, in the invention, the imbalance between the amount of each sub-beam reflected by the knife edge 11 to the photodetectors and the imbalance in the reflectance of the non-recorded portion 15 and the recorded portion 16 of the optical disc 2 are arranged to compensate for one another. Therefore the amount of light from sub-beams Bₛ₁ and Bₛ₂ received by the photodetectors for detecting tracking error signals are equal. In that case an imbalance in the received amounts of light indicates a tracking error rather than being systematic. Therefore in accordance with the present invention, the imbalance between the amount of light of the two sub-beams reflected to the photoreceptor 13 by the knife edge 11 is automatically compensated for.

As described above, the present invention is described as applied to an optical pick-up apparatus using the three-beam method to detect the tracking error signal. However, the present invention can equally be applied to an optical pick-up apparatus which detects the tracking error signal using the differential push-pull method.

As discussed above, in the present invention a method is defined for an optical pick-up apparatus which detects the focusing error signal using the knife edge method is arranged so that the sub-spot giving rise to the detection sub-beam which is intercepted by the knife edge to a lesser extent is located ahead of the main spot in the recording direction whilst the sub-spot giving rise to the detection sub-beam which is intercepted to a greater extent by the knife edge is located on the optical disc behind the main spot relative to the recording direction. Therefore the imbalance between a proportion of the sub-beams directed to the photodetectors by the knife edge is compensated for by the imbalance between the reflectance of the non-recorded and recorded portions of the optical disc. Accordingly the amount of light detected by the photodetectors can be used to detect the tracking error signal without correction.

## Claims

1. An method for an optical pick-up apparatus for projecting on to an optical disc main light spot for recording, reproducing and erasing information and two light sub-spots for detecting a tracking error signal, a first one of the two sub-spots being projected on to the optical disc ahead of the main spot relative to the recording direction and a second one of the two sub-spots being projected on to the disc behind the main spot relative to the recording direction, the optical pick-up apparatus detecting a focusing error signal in one photodetector by the knife edge method, the knife edge reflecting a part of the detection beams to another photodetector for detecting tracking error signals; **characterised in that**:
the sub-spot which gives rise to the detection sub-beam which is intercepted by the knife edge to a lesser extent is projected onto the optical disc in a position which is located between a track on which the main spot is radiated and a non-record track ahead of the main spot relative to the recording direction, and the sub-spot which gives rise to the detection sub-beam which is intercepted by the knife edge to a greater extent is projected onto the optical disc in a position which is located between a track on which the main spot is radiated and the recorded truck behind the main beam relative to the recording direction.

2. A method for an optical pick-up apparatus according to claim 1 wherein the tracking signal is detected by the three-beam method.

3. A method for an optical pick-up apparatus according to claim 1 wherein the tracking error signal is detected by the differential push-pull method.

## Patentansprüche

1. Verfahren zum Abbilden eines Hauptlichtfleckens zum Aufzeichnen, Wiedergeben und Löschen von Informationen, und zwei Nebenlichtflecken, zum Erfassen eines Spur-bzw. Nachführfehlersignals, auf eine optische Scheibe wobei ein erster der zwei Nebenflecken auf die optische Scheibe relativ zu der Aufzeichnungsrichtung dem Hauptflecken voraneilend projiziert wird, und ein zweiter der zwei Nebenflecken wird auf die Scheibe hinter dem Hauptflecken relativ zu der Aufzeichnungsrichtung projiziert wird, wobei die optische Aufnahmevorrichtung ein Fokussierungsfehlersignal in einem Fotodetektor durch das Messerschneideverfahren erfasst, wobei die Messerschneide einen Teil der erfassten Strahlen zu einem anderem Fotodetektor reflektiert, um Spur- bzw. Führungsfehlersignale zu erfassen; **dadurch gekennzeichnet, dass**:
der Nebenflecken, der Anlass zu der Erfassung des Nebenstrahles gibt, der durch die Messerschneide in einem geringeren Ausmaß abgeschnitten wird, auf die optische Scheibe an einer Position projiziert wird, die zwischen einer Spur, auf die der Hauptflecken gestrahlt wird, und einer Nichtaufzeichnungsspur platziert ist, dem Hauptflecken relativ zu der Aufzeichnungsrichtung voran projiziert wird, und der Nebenflecken, der Anlass für die Erfassung des Nebenstrahles gibt, der durch die Messerschneide in einem größeren Ausmaß abgeschnitten wird, wird auf die optische Scheibe in einer Position, die zwischen einer Spur, auf den der Hauptflecken gestrahlt wird, und der Aufzeichnungsspur hinter dem Hauptstrahl relativ zu der Aufzeichnungsrichtung projiziert.

2. Verfahren nach Anspruch 1, wobei das Spur- bzw. Führungssignal durch das Drei-Strahl-Verfahren erfasst wird.

3. Verfahren nach Anspruch 1, wobei das Spur- bzw. Führungsfehlersignal durch das differenzielle Gegentaktverfahren erfasst wird.

## Revendications

1. Procédé pour un dispositif de tête optique pour projeter sur un disque optique un point lumineux principal afin d'enregistrer, de reproduire et d'effacer des informations et deux points lumineux secondaires pour détecter un signal d'erreur de poursuite, un premier des deux points secondaires étant projeté sur le disque optique devant le point principal par rapport à la direction d'enregistrement et un deuxième des deux points secondaires étant projeté sur le disque optique derrière le point principal par rapport à la direction d'enregistrement, le dispositif de tête optique détectant un signal d'erreur de focalisation dans un photodétecteur par la méthode du couteau, le couteau réfléchissant une partie des faisceaux de détection jusqu'à un autre photodétecteur pour détecter des signaux d'erreur de poursuite ; **caractérisé en ce que** :
le point secondaire qui donne lieu au faisceau secondaire de détection qui est intercepté par le couteau dans une moindre mesure est projeté sur le disque optique en une position qui est située entre une piste sur laquelle est projeté le point principal et une piste de non enregistrement, devant le point principal par rapport à la direction d'enregistrement, et le point secondaire qui donne lieu au faisceau secondaire de détection qui est intercepté par le couteau dans une plus grande mesure est projeté sur le disque optique en une position qui est située entre une piste sur laquelle est projeté le point principal et la piste enregistrée, derrière le faisceau principal par rapport à la direction d'enregistrement.

2. Procédé pour un dispositif de tête optique selon la revendication 1, dans lequel le signal de poursuite est détecté par la méthode des trois faisceaux.

3. Procédé pour un dispositif de tête optique selon la revendication 1, dans lequel le signal d'erreur de poursuite est détecté par la méthode symétrique différentielle.
